# EUROPEAN PATENT APPLICATION

(11) **EP 3 225 102 A1**
(43) Date of publication of application: **04.10.2017**
(21) Application number: 17155975.0
(22) Date of filing: 14.02.2017
(51) Int. Cl.: A01G 23/081, A01G 23/091

(54) **TILTING SAW BLADE FOR A FELLER HEAD**

(30) Priority: 31.03.2016 CA 2925639
(71) Applicant: Banman, Franz D., Grande Prairie, Alberta T8X 0H7 (CA)
(72) Inventor: Banman, Franz D., Grande Prairie, Alberta T8X 0H7 (CA)
(74) Representative: Mannion, Daniel James

(57) **Abstract**

A feller head (10) for use with a prime mover (12) in harvesting trees has a grapple (14) that defines a cavity having a vertical axis (15). The cavity is designed to receive a tree to be harvested along the vertical axis. A cutter blade (16) is mounted below the grapple. The cutter blade is suitable for cutting through the tree being harvested and defines a cutting plane along which the tree is cut. An adjustable mounting (22) mounts the cutter blade to the grapple and permits pivotal movement of the cutting plane about a roll axis (32) and a pitch axis (30). An actuator (28) controls the pivotal movement of the cutting plane about the roll axis and the pitch axis.

## Description

### TECHNICAL FIELD

This relates to a tilting saw blade for use with a feller head intended to cut down trees.

### BACKGROUND

Feller heads, or feller buncher heads, are used in logging to cut down trees. Typical feller heads have a top grapple portion and a saw below the grapple. The grapple engages a tree and the saw cuts through the tree. Typical feller bunchers are intended for use on a horizontal surface. However, as trees often grow on slopes, there is an added challenge in cutting down these trees. US Patent No. 4,763,742 teaches a tree feller-buncher for use on steep slopes that allows the buncher to cut the trees without tipping on the slope.

### SUMMARY

There is provided a feller head for use with a prime mover in harvesting trees. The feller head comprises a grapple, the grapple defining a cavity having a vertical axis, the cavity being designed to receive a tree to be harvested along the vertical axis. A cutter blade is mounted below the grapple, the cutter blade being suitable for cutting through the tree being harvested, the cutter blade defining a cutting plane along which the tree is cut. An adjustable mounting mounts the cutter blade to the grapple, the adjustable mounting permitting pivotal movement of the cutting plane about a roll axis and a pitch axis. An actuator controls the pivotal movement of the cutting plane about the roll axis and the pitch axis.

In other aspects, the feller buncher may include one or more of the following elements, alone or in combination: the cutter blade may be a circular saw blade having an axis of rotation that is orthogonal to the cutting plane; the adjustable mounting may comprise a first hinge that permits movement about the roll axis and a second hinge that permits movement about the pitch axis; and the actuator may comprise one or more first linear actuators that control movement of the first hinge, and one or more second linear actuators that control movement of the second hinge.

Other aspects will be apparent from the specification below and drawings.

### BRIEF DESCRIPTION OF THE DRAWINGS

These and other features will become more apparent from the following description in which reference is made to the appended drawings, the drawings are for the purpose of illustration only and are not intended to be in any way limiting, wherein:
FIG. 1 is a side elevation view of a feller buncher.
FIG. 2 is a front perspective view of a feller head.
FIG. 3 is a rear perspective view of a feller head.
FIG. 4a - 4e are side elevation views of the feller head in various pivotal positions about a first axis.
FIG. 5a - 5e are front elevation views of the feller head in various pivotal positions about a second axis.

### DETAILED DESCRIPTION

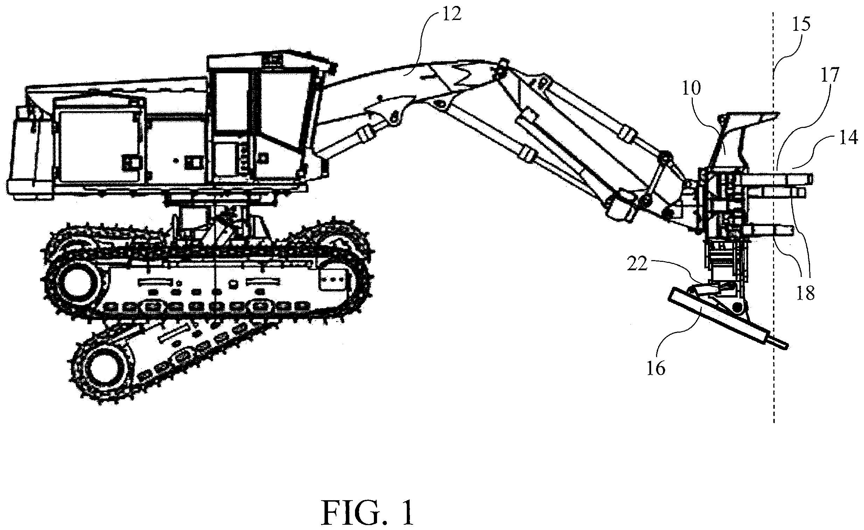

A feller head, identified by reference numeral 10, will now be described with reference to FIG. 1 through 5e.

When harvesting trees, it is desired to cut a stump as close to the ground as possible. However, when a tree is on a slope, a horizontal blade will leave a triangular stump on the slope after the tree has been harvested. Feller head 10 is designed to cut a stump as close to the ground as possible, and minimize the amount of stump left on the ground.

Referring to FIG. 1, feller head 10 is mounted to a prime mover 12. The depicted prime mover 12 is a typical type of tracked machine used in harvesting trees, although other equipment may also be used with feller head 10. Feller head 10 has a grapple 14 mounted above a cutter blade 16. Grapple 14 may be any suitable type of grapple known in the art. A typical grapple 14 has arms 18 that open and close hydraulically, and that are spaced along the height of a cavity 17 that extends along a vertical axis 15. A tree being harvested will be received within cavity 17, and held by arms 18. As the tree is harvested, the tree will be held by grapple 14 within cavity 17, and may then be manipulated and moved by grapple 14 as known in the art.

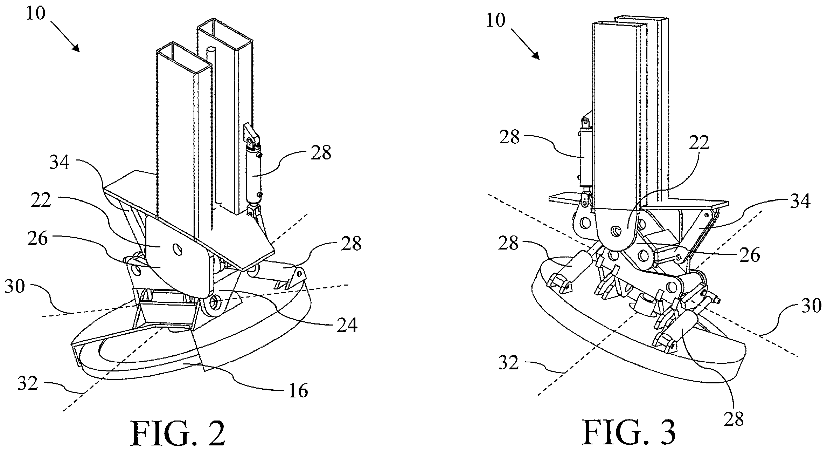

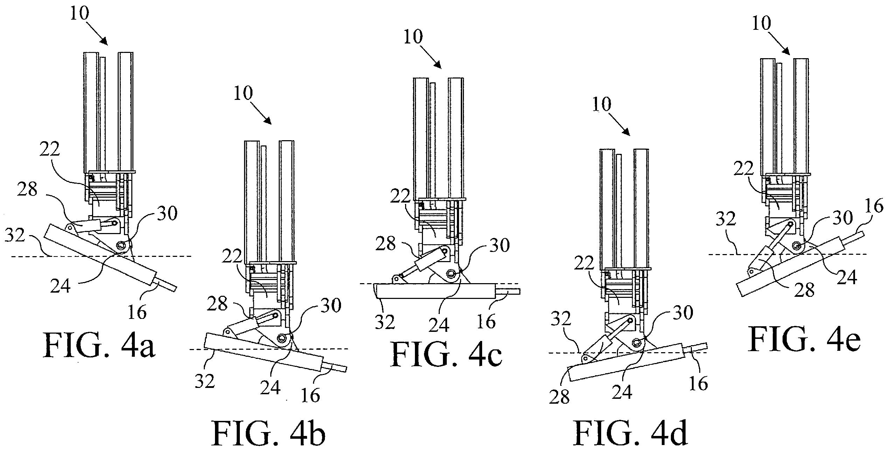

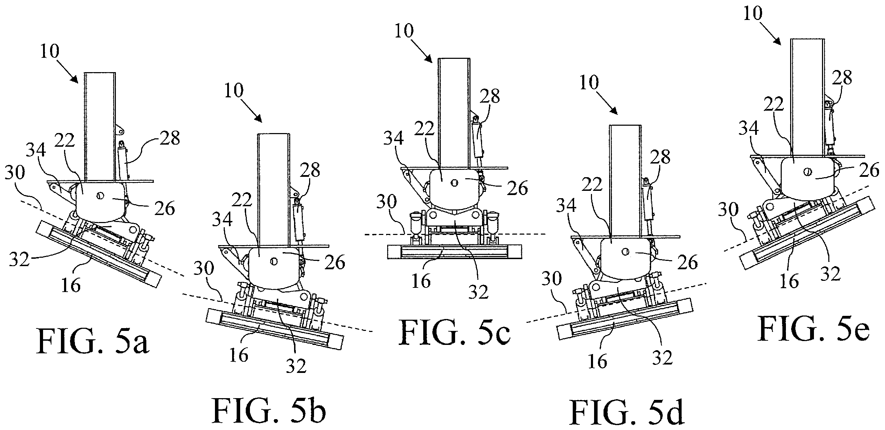

Cutter blade 16 may be any type of blade that is suitable for cutting through a tree being harvested. As shown in FIG. 2 and 3, cutter blade 16 is a circular blade that has an axis of rotation and defines a cutting plane along which the tree is cut. Cutter blade 16 is mounted below grapple 14 by an adjustable mounting 22. Adjustable mounting 22 permits pivotal movement of the cutting plane of cutter blade 16 about a pitch axis 30, as shown in FIG. 4a - 4e, and a roll axis 32, as shown in FIG. 5a - 5e. Movement about the pitch axis 30 as shown in FIG. 4a - 4e permits cutter blade 16 to move pivotally from front to back, such that the leading cutting edge of cutter blade 16 is raised and lowered. Movement about the roll axis 32 permits side to side pivotal movement, such that the sides of cutter blade 16 are raised or lowered. By adjusting about the pitch and roll axis 30 and 32, the angle of cutter blade 16 can approximate a particular slope on which the tree is growing to minimize the amount of stump that remains after the tree has been harvested.

As depicted in FIG. 2 and 3, the pitch axis 30 is defined by a first hinge 24 and the roll axis 32 is defined by a second hinge 26. As can be seen, second hinge 26 is more complex than a single-axis hinge, and cooperates with a connector arm 34 as shown to enable the motion shown in FIG. 5a through 5e. Second hinge 26 and connector arm 34 cooperate to ensure the center of blade 16 remains aligned with cavity 17 by allowing some lateral movement of certain components in hinge 26 as blade 16 pivots, such that the effective roll axis 32 is moved down closer to be co-incident with, or approximately co-incident with, blade 16. Second hinge 26 may be designed to move blade 16 about any suitable effective roll axis 32. Separate hydraulic cylinders 28, or other types of linear actuators, are provided for moving cutter blade 16 about each of hinges 24 and 26. While it is not necessary that the hinges be mutually orthogonal, or that they correspond with the pitch and roll axes 30 and 32, having them positioned in this manner helps simplify the design and control of moving cutter blade 16. It will be understood that the pivotal movement may also be permitted using different designs, and controlled by different types of actuators. In some designs, the pivotal movement about each axis may not be independent or decoupled as is the case in the depicted design with two separate hinges and may be actuated by rotary actuators. In some designs, connector arm 34 may be replaced with an additional hydraulic cylinder 28, allowing for an additional direction of movement. Substitution of connector arm 34 with hydraulic cylinder 28 allows cutter blade 16 to be moved into and out of alignment with grapple 14. For example, when a tree to be cut is at an angle, cutter blade 16 may be extended past the grapple 14 such that it begins cutting of the tree prior to engagement of the tree by grapple 14.

In this patent document, the word "comprising" is used in its non-limiting sense to mean that items following the word are included, but items not specifically mentioned are not excluded. A reference to an element by the indefinite article "a" does not exclude the possibility that more than one of the elements is present, unless the context clearly requires that there be one and only one of the elements.

The scope of the following claims should not be limited by the preferred embodiments set forth in the examples above and in the drawings, but should be given the broadest interpretation consistent with the description as a whole.

## Claims

1. A feller head for use with a prime mover in harvesting trees, the feller head comprising:
a grapple, the grapple defining a cavity having a vertical axis, the cavity being designed to receive a tree to be harvested along the vertical axis;
a cutter blade mounted below the grapple, the cutter blade being suitable for cutting through the tree being harvested, the cutter blade defining a cutting plane along which the tree is cut;
an adjustable mounting that mounts the cutter blade to the grapple, the adjustable mounting permitting pivotal movement of the cutting plane about a roll axis and a pitch axis; and
an actuator that controls the pivotal movement of the cutting plane about the roll axis and the pitch axis.

2. The feller head of claim 1, wherein the cutter blade is a circular saw blade having an axis of rotation that is orthogonal to the cutting plane.

3. The feller head of claim 1, wherein the adjustable mounting comprises a first hinge that permits movement about the roll axis and a second hinge that permits movement about the pitch axis.

4. The feller head of claim 3, wherein the actuator comprises one or more first linear actuators that control movement of the first hinge, and one or more second linear actuators that control movement of the second hinge.

5. The feller head of claim 3, wherein the second hinge comprises a pivoting axis that moves laterally as it pivots to ensure the cutter blade remains aligned with the vertical axis of the cavity.

6. The feller head of claim 1, wherein the roll axis is co-incident with or immediately adjacent to the cutting plane.
